**Europäisches Patentamt**

**European Patent Office**

**Office européen des brevets**

(19)

(11) Veröffentlichungsnummer: **0 170 127**
**B1**

(12) **EUROPÄISCHE PATENTSCHRIFT**

(45) Veröffentlichungstag der Patentschrift: **11.04.90**

(51) Int. Cl.⁵: **B 29 D 30/52**

(21) Anmeldenummer: **85108666.0**

(22) Anmeldetag: **11.07.85**

(54) Unvulkanisierter Laufstreifen für Fahrzeugluftreifen.

(30) Priorität: **01.08.84 DE 3428368**

(43) Veröffentlichungstag der Anmeldung:
**05.02.86 Patentblatt 86/06**

(45) Bekanntmachung des Hinweises auf die
Patenterteilung:
**11.04.90 Patentblatt 90/15**

(84) Benannte Vertragsstaaten:
**AT BE DE FR GB IT LU NL SE**

(56) Entgegenhaltungen:
**DE-A-3 114 121**
**US-A-2 345 518**
**US-A-2 386 502**
**US-A-3 537 500**
**US-A-3 970 493**

(73) Patentinhaber: **Continental Aktiengesellschaft**
**Königsworther Platz 1**
**D-3000 Hannover 1 (DE)**

(72) Erfinder: **Schallmeier, Günter, Dipl.-Ing.**
**Brandenburger Ring 12**
**D-3057 Neustadt 1 (DE)**
Erfinder: **DE Vries, Gerhard, Dr. Dipl.-Ing.**
**Im Hespe 36**
**D-3008 Garbsen 4 (DE)**

(74) Vertreter: **Schneider, Egon**
**c/o CONTINENTAL Aktiengesellschaft**
**Königsworther Platz 1 Postfach 169**
**D-3000 Hannover 1 (DE)**

## Beschreibung

Die Erfindung betrifft einen aus zwei oder mehreren übereinander angeordneten Laufstreifen für Fahrzeugluftreifen, also einen sogenannten Rohlaufstreifen, der gleichwohl für die Herstellung von Neureifen und die Runderneuerung oder Besohlung von abgefahrenen Reifen dienen kann.

Mehrschichtige Laufstreifen werden benötigt, um im Vergleich zu einschichtigen Laufstreifen eine bessere Haltbarkeit zu erzielen. Die dabei verwendeten unterschiedlichen Gummimischungen haben aber sehr oft den Nachteil, daß sie untereinander nicht die erforderliche Haftung eingehen.

Um die damit verbundenen Lösungen auszuschalten und demgemäß Bindungsschwächen auszugleichen, greifen erfindungsgemäß benachbarte Schichten des Laufstreifens durch eine Vielzahl von Vorsprüngen und entsprechenden Vertiefungen formschlüssig ineinander.

Es sind bereits Luftreifen bekannt, bei denen zwischen übereinanderliegenden Schichten des Laufstreifens ein Formschluß gegeben ist. Dieser ist jedoch bedingt durch die Fließbewegung des Kautschuks innerhalb der Vulkanisierform und daher nicht genau im voraus zu bestimmen. Demegenüber betrifft die Erfindung unvulkanisierte Laufstreifen, denen bereits in diesem Zustand, also vor dem Abformen in der Vulkanisierform ein Formschluß vermittelt wird. Dieser Formschluß verbessert das Haftvermögen und beseitigt demgemäß Haftungsschwächen.

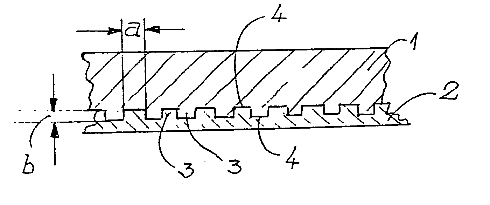

Ein Ausführungsbeispiel der Erfindung ist in der Zeichnung dargestellt.

Die Abbildung zeigt einen Rohlaufstreifen für die Herstellung eines Neureifens (Fahrzeugluftreifen) im Querschnitt.

Die beim Gebrauch des Reifens außen liegende und somit obere Schicht des Laufstreifens ist mit 1 Bezeichnet, die nach innen gekehrte Gummischicht mit 2.

Im Regelfall ist die Wandstärke der Schicht 2 wesentlich kleiner als die Schicht, 1, die späterhin im vulkanisierten Zustand, also beim fertigen Reifen dem Abreib unterworfen ist. Beide Schichten unterscheiden sich durch ihre chemischen und/oder physikalischen Eigenschaften, wie dies in bekannter Weise bei sogenannten "Cap und Base"-Laufstreifenausführungen der Fall ist.

Der Formschluß der beiden Schichten 1 und 2 wird durch im wesentlichen rechteckige Vorsprünge 3 der einen Schicht erreicht, die in entsprechende Ansnehmungen 4 der Schicht 1 eingreifen, wobei es sich versteht, daß diese Vorsprünge 3 und Ausnehmungen 4 als Einzelvorsprünge ausgeführt sein können, wenngleich Vorsprünge 3 bzw. Vertiefungen 4 vorzuziehen sind, die rippenartig bzw. nutenartig in Längsrichtung des Laufstreifens ausgebildet sind. Das Breitenmaß a der Vorsprünge 3 bzw. der Vertiefungen 4 soll dabei etwa 0,8 bis 3 mm betragen, während für das zugehörige Tiefenmaß b vorzugsweise Werte von etwa 0,5 bis 2,5 mm zu wählen sind.

Die so ausgebildeten Rohlaufstreifen werden in einem gemeinsamen Spritzvorgang ecxtrudiert und mechanisch gepreßt. Mit der Vulkanisation erfolgt ein Zusammenvulkanisieren, wobei es durchaus möglich sein kann, daß an einigen Stellen der Formschluß bzw. die hierdurch bedingten Ebenen verzerrt werden.

## Patentansprüche

1. Aus zwei oder mehreren übereinander angeordneten Schichten betehender unvulkanisierter Laufstreifen (Rohlaufstreifen) für Fahrzeugluftreifen, dadurch gekennzeichnet, daß benachbarte Schichten durch eine Vielzahl von Vorsprüngen (3) und entsprechenden Vertiefungen (4) formschlüssig ineinandergreifen.

Laufstreifen nach Anspruch 1, dadurch gekennzeichnet, daß die Vorsprünge (3) bzw. Vertiefungen (4) eine Breite von etwa 0.5 bis 3 mm haben.

3. Laufstreifen nach Anspruch 1, dadurch gekennzeichnet, daß die Tiefe der Vorsprünge (3) bzw. der Vertiefungen (4) etwa 0,5 bis 2,5 mm beträgt.

4. Laufstreifen nach Anspruch 1, dadurch gekennzeichnet, daß die Vorsprünge (3) rippenartig bzw. die Vertiefungen (4) nutenartig ausgebildet sind.

5. Laufstreifen nach Anspruch 4, dadurch gekennzeichnet, daß sich die Rippen bzw. Nuten in Laufstreifen-Längsrichtung erstrecken.

## Revendications

1. Chape no vulcanisée pour bande de roulement (chape brute), se composant de deux ou plus de deux couches disposées l'une sur l'autre, pour pneumatiques de véhicules, caractérisée en ce que des couches adjacentes s'accrochent l'une dans l'autre par complémentarité de formes au moyen d'un grand nombre de saillies (3) et de creux correspondants (4).

2. Chape selon la revendiction 1, caractérisée en ce que les saillies (3) ou les creux (4) ont une largeur d'environ 0,5 à 3 mm.

3. Chape selon la revendiction 1, caractérisée en ce que la profondeur des saillies (3) ou des creux (4) s'élève à environ 0,5 à 2,5 mm.

4. Chape selon la revendiction 1, caractérisée en ce que les saillies (3) sont agencées en forme de nervures et les creux (4) sont agencés en forme de rainures.

5. Chape selon la revendiction 4, caractérisée en ce que les nervures ou les rainures sont orientées dans la direction longitudinale de la chape.

## Claims

1. Unvulcanised tread strip (untreated tread strip) for pneumatic vehicle tyres, which strip comprises two or more layers disposed one above the other, characterized in that adjacent layers engage in one another in a form-locking manner by means of a plurality of projections (3) and corresponding recesses (4).

2. Tread strip according to claim 1, characterised in that the projections (3) and recesses (4) each have a width of about 0.5 to 3 mm.

3. Tread strip according to claim 1, characterised in that the depth of each of the projections (3) and recesses (4) is about 0.5 to 2.5 mm.

4. Tread strip according to claim 1, characterised in that all of the projections (3) are rib-like, and all of the recesses (4) are groove-like.

5. Tread strip according to claim 4, characterised in that the ribs and grooves each extend in the longitudinal direction of the tread strip.